# EUROPEAN PATENT APPLICATION

(11) **EP 3 444 730 A1**
(43) Date of publication of application: **20.02.2019**
(21) Application number: 17781730.1
(22) Date of filing: 10.02.2017
(51) Int. Cl.: G06F 17/30

(54) **FILE STORAGE METHOD AND DEVICE**

(30) Priority: 14.04.2016 CN 201610234765
(71) Applicant: Hangzhou Hikvision Digital Technology Co., Ltd., Hangzhou 310051 (CN)
(72) Inventor: DING, Zhiyong, Hangzhou Zhejiang 310051 (CN); WANG, Weichun, Hangzhou Zhejiang 310051 (CN); CHEN, Wei, Hangzhou Zhejiang 310051 (CN); CAO, Li, Hangzhou Zhejiang 310051 (CN)
(74) Representative: IPAZ
(86) International application number: PCT/CN2017/073202
(87) International publication number: WO 2017/177754

(57) **Abstract**

A file storage method and apparatus applicable to a storage terminal are disclosed. The method involves: receiving a storage request for a to-be-stored file (S101); determining a target key for storing the to-be-stored file (S102); obtaining to-be-stored metadata for the to-be-stored file based on the determined target key (S103); storing the to-be-stored metadata into a preset metadata database and into a name of the determined target key, and storing the to-be-stored file into a value of the determined target key (S 104). With the method and the apparatus, the restore of the metadata is effectively ensured, and the storage space of the storage terminal is saved.

## Description

### TECHNICAL FIELD

The present application relates to the field of data processing, and in particular, to a method and apparatus for storing a file.

### BACKGROUND

Currently, to store a file, metadata of the file has to be stored in a storage terminal, so that the storage terminal obtains the file based on the metadata upon a request for accessing to the data. Once the metadata is lost, even if the data is obtained by reading, it is impossible to determine which file the read data belongs to, resulting in loss of the file.

In order to avoid the loss of the file, the following two ways are often used for storing a file.

One way is to back up metadata. When storing a file, the metadata of the file is stored in a metadata database, and the metadata of the file is stored in a backup metadata database. If the metadata in the metadata database is lost, the metadata in the backup metadata database may be used to restore the original metadata in the metadata database, and thus avoiding the loss of the file. Although, in this way, the security of the metadata is enhanced by the recovery of the metadata in the metadata database, additional storage spaces are required for storing the metadata in the backup metadata database. Additionally, in order to restore the metadata in the metadata database more securely, multiple backup metadata databases are usually created on the storage terminal, which would occupy more storage spaces on the storage terminal.

The other way is to record operations on metadata in a log. The operations on the metadata in the metadata database that are recorded in the log may include, for example, when and which metadata is stored, when and which metadata is deleted, and when and which metadata is updated. In this way, if the metadata in the metadata database is lost, the records of the operations on the metadata in the log may be used to restore the metadata in the metadata database, avoiding the loss of the file. However, in this way, additional storage spaces are also required for storing the log, which would occupy much storage spaces on a storage server.

It can be seen from the above, in order to avoid the loss of the file and ensure that the lost metadata can be recovered, the related technology requires additional storage space, which reduces the effective utilization of the storage space by the storage terminal.

### SUMMARY

Embodiments of the present application disclose a method and apparatus for storing a file to ensure recovery of metadata and meanwhile save the storage space of the storage terminal.

To achieve the above objective, an embodiment of the present application discloses a method for storing a file, which is applicable in a storage terminal. The method includes:
receiving a storage request for a to-be-stored file;
determining a target key for storing the to-be-stored file;
obtaining to-be-stored metadata of the to-be-stored file based on the determined target key; and
storing the to-be-stored metadata into a preset metadata database and into a name of the determined target key, and storing the to-be-stored file into a value of the determined target key.

Optionally, in the case where a plurality of target keys are determined, before obtaining to-be-stored metadata of the to-be-stored file based on the determined target keys, the method further includes:
obtaining a file block of the to-be-stored file, which is to be stored by each target key, based on the number of the determined target keys;
obtaining to-be-stored metadata of the to-be-stored file based on the determined target keys comprises:
   obtaining metadata of the file block to be stored by each target key, and determining the obtained metadata as the to-be-stored metadata of the to-be-stored file.

Optionally, obtaining metadata of the file block to be stored by each target key includes:
determining an offset of a file block to be stored by each target key relative to a file header of the to-be-stored file; and
obtaining metadata of a file block to be stored by each target key, based on an offset of a file block to be stored by this target key relative to a file header of the to-be-stored file.

Optionally, the method further includes:
in the event that there is a loss of metadata in the preset metadata database, updating the preset metadata database based on metadata stored in names of all keys.

Optionally, the to-be-stored metadata comprises an identifier of the to-be-stored file;
updating the preset metadata database based on metadata stored in names of all keys includes:
obtaining an identifier of a file whose metadata is lost;
based on the obtained identifier and the metadata stored in the names of all keys, determining a key containing the obtained identifier; and
updating the preset metadata database based on the metadata stored in a name of the determined key.

To achieve the above objective, an embodiment of the present application further discloses an apparatus for storing a file, which is applicable in a storage terminal. The apparatus includes: a storage request receiving module, a target key determining module, a metadata obtaining module and a data storing module.

The storage request receiving module is configured for receiving a storage request for a to-be-stored file;
the target key determining module is configured for determining a target key for storing the to-be-stored file;
the metadata obtaining module is configured for obtaining to-be-stored metadata of the to-be-stored file based on the determined target key; and
the data storing module is configured for storing the to-be-stored metadata into a preset metadata database and into a name of the determined target key, and storing the to-be-stored file into a value of the determined target key.

Optionally, the apparatus further includes: a file block obtaining module, configured for
in the case where a plurality of target keys are determined, obtaining a file block of the to-be-stored file, which is to be stored by each target key, based on the number of the determined target keys.

The metadata obtaining module is specifically configured for:
obtaining metadata of the file block to be stored by each target key, and determining the obtained metadata as the to-be-stored metadata of the to-be-stored file.

Optionally, the metadata obtaining module includes: an offset determining submodule and a metadata obtaining submodule.

The offset determining submodule is configured for determining an offset of a file block to be stored by each target key relative to a file header of the to-be-stored file; and
the metadata obtaining submodule is configured for obtaining metadata of a file block to be stored by each target key, based on an offset of a file block to be stored by this target key relative to a file header of the to-be-stored file.

Optionally, the apparatus further includes: a metadata database updating module.

The metadata database updating module is configured for, in the event that there is a loss of metadata in the preset metadata database, updating the preset metadata database based on metadata stored in names of all keys.

Optionally, the to-be-stored metadata contains an identifier of the to-be-stored file.

The metadata database updating module includes: an identifier obtaining submodule, a key determining submodule and a database updating submodule.

The identifier obtaining submodule is configured for obtaining an identifier of a file whose metadata is lost;
the key determining submodule is configured for, based on the obtained identifier and the metadata stored in the names of all keys, determining a key containing the obtained identifier; and
the database updating submodule is configured for updating the preset metadata database based on the metadata stored in a name of the determined key.

To achieve the above objective, an embodiment of the present application further discloses a storage terminal, including: a housing, a processor, a memory, a circuit board, and a power circuit. The circuit board is arranged inside space surrounded by the housing. The processor and the memory are arranged on the circuit board. The power circuit is configured for supplying power to each circuit or component of the storage terminal. The memory is configured for storing an executable program code. The processor carries out the following steps by executing the executable program code stored in the memory:
receiving a storage request for a to-be-stored file;
determining a target key for storing the to-be-stored file;
obtaining to-be-stored metadata of the to-be-stored file based on the determined target key; and
storing the to-be-stored metadata into a preset metadata database and into a name of the determined target key, and storing the to-be-stored file into a value of the determined target key.

Optionally, the storage terminal is further configured for:
in the case where a plurality of target keys are determined, before obtaining to-be-stored metadata of the to-be-stored file based on the determined target keys,
obtaining a file block to be stored of the to-be-stored file, which is to be stored by each target key, based on the number of the determined target keys;
obtaining to-be-stored metadata of the to-be-stored file based on the determined target keys comprises:
   obtaining metadata of the file block to be stored by each target key, and determining the obtained metadata as the to-be-stored metadata of the to-be-stored file.

Optionally, the storage terminal is further configured for:
determining an offset of a file block to be stored by each target key relative to a file header of the to-be-stored file; and
obtaining metadata of a file block to be stored by each target key, based on an offset of a file block to be stored by each target key relative to a file header of the to-be-stored file.

To achieve the above objective, an embodiment of the present application further discloses an executable program code, which is used for performing the following steps when being executed:
receiving a storage request for a to-be-stored file;
determining a target key for storing the to-be-stored file;
obtaining to-be-stored metadata of the to-be-stored file based on the determined target key; and
storing the to-be-stored metadata into a preset metadata database and into a name of the determined target key, and storing the to-be-stored file into a value of the determined target key.

To achieve the above objective, an embodiment of the present application further discloses a storage medium for storing an executable program code. The executable program code is used for performing the following steps when being executed:
receiving a storage request for a to-be-stored file;
determining a target key for storing the to-be-stored file;
obtaining to-be-stored metadata of the to-be-stored file based on the determined target key; and
storing the to-be-stored metadata into a preset metadata database and into a name of the determined target key, and storing the to-be-stored file into a value of the determined target key.

As can be seen from the above, in the embodiments of the present application, after receiving a storage request for storing a file, the storage terminal obtains to-be-stored metadata for the to-be-stored file, stores the to-be-stored metadata into the name of the target key and into the metadata database, and stores the to-be-stored file into the value of the target key. In this way, the metadata in the metadata database may be restored based on the metadata stored in the name of the key in the event that the metadata in the metadata database is lost, ensuring the recovery of the metadata. Additionally, metadata are stored into the fixed storage space that originally taken by the name of the key and thus does not occupy additional storage space, thereby saving storage space of the storage terminal.

### BRIEF DESCRIPTION OF THE DRAWINGS

To describe the solutions of embodiments of the present application or the related technology more clearly, the drawings to be used in the description of embodiments or the related technology will be described briefly below. Obviously, the drawings described below are merely drawings of some embodiments of the present application. Those skilled in the art can obtain other drawings based on these drawings without creative efforts.
FIG. 1 is a schematic flowchart of a method for storing a file provided by an embodiment of the present application;
FIG. 2 is a schematic flowchart of another method for storing a file provided by an embodiment of the present application;
FIG. 3 is a schematic flowchart of another method for storing a file provided by an embodiment of the present application;
FIG. 4 is a schematic structure diagram of an apparatus for storing a file provided by an embodiment of the present application;
FIG. 5 is a schematic structure diagram of another apparatus for storing a file provided by an embodiment of the present application;
FIG. 6 is a schematic structure diagram of yet another apparatus for storing a file provided by an embodiment of the present application.

### DETAILED DESCRIPTION

The technical solutions in the embodiments of the present application will be fully and clearly described in combination with the drawings of the embodiments of the application. Obviously, the embodiments described are merely some of the embodiments of the present application, not all of the embodiments. All other embodiments obtained based on the embodiments herein by those skilled in the art without any creative efforts fall into the scope of protection defined by the present application.

The present application will be described in detail below with specific embodiments.

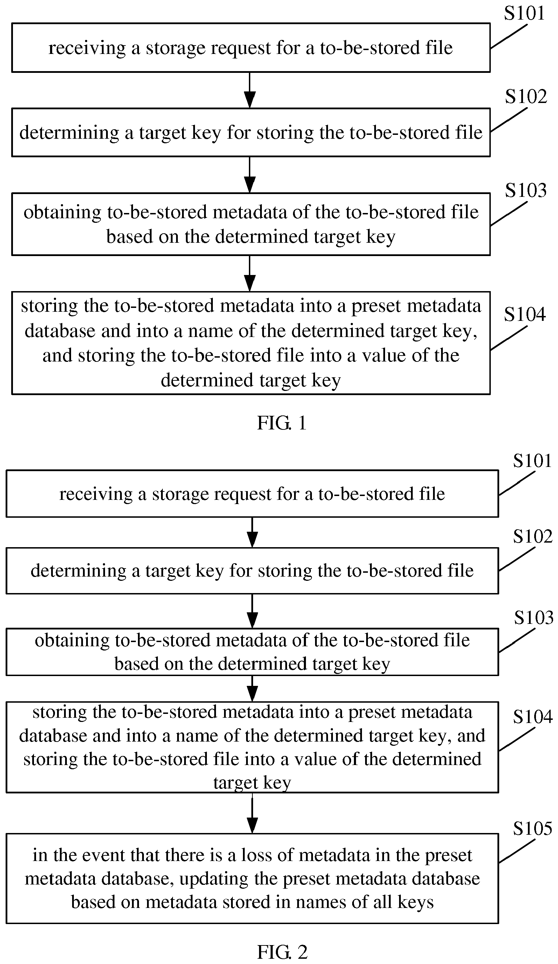

Referring to FIG. 1, it is a schematic flowchart of a method for storing a file provided by an embodiment of the present application. The method is applicable in a storage terminal, and may include the following operations.
S101: receiving a storage request for a to-be-stored file.

Here, the storage request may contain the to-be-stored file. The storage request may further contain an identifier of the to-be-stored file, so that the storage terminal may quickly obtain the identifier of the to-be-stored file, and then stores metadata of the to-be-stored file. Alternatively, the storage request may not contain the identifier of the to-be-stored file, and the storage terminal may analyze the to-be-stored file to obtain the identifier of this file, which makes the storage request more brief and clear.
S102: determining a target key for storing the to-be-stored file.

It is a big challenge for existing storage terminals to store massive data with high reliability and scalability. It is difficult for traditional databases to meet the requirement. The use of relational databases in this case will reduce the efficiency of storing and reading data, and make the extension of the database a big problem. In this case, in an implementation of the present application, the use of a key-value store would be a good choice. The key-value store has the following advantages:
1. Availability;
2. Scalability;
3. Failover;
4. High Performance.

A key consists of a name (Key) and values (Value). Both the Key and Value occupy a fixed amount of storage space.

The amount D1 of data that can be stored by the values of each key is fixed, while the amount D2 of data of a to-be-stored file is not fixed. When the amount D2 of data of the to-be-stored file is greater than the amount D1 of data that can be stored by the values of a key, two, three or more target keys are needed to store the to-be-stored file.

In an implementation of the present application, the number of needed target keys may be calculated based on the amount of data of the to-be-stored file and the amount of data that can be stored by the values of a key. In general, the number of needed target keys may be calculated by dividing the amount D2 of data of the to-be-stored file by the amount D1 of data that can be stored by the values of a key, and rounding up the quotient. For example, if the amount D2 of data of the to-be-stored file is 1.2 M, and the amount D1 of data that can be stored by the values of a key is 1 M, 1.2/1=1.2, rounding up 1.2 equals to 2, and thus the number of target keys required for storing the to-be-stored file would be calculated as 2.

After the number of the target keys is determined, the target keys for storing the to-be-stored file may be further determined. In an embodiment of the present application, an end storage location for data after the last storing of data is determined, and the number of idle keys, which equals to the number of the needed target keys, that are subsequent to the end storage location are selected as the target keys. For example, there are currently 5 keys in the storage terminal, which are a, b, c, d and e. If the end storage location after the last storing of data is at key "a", key "c" has data stored thereon, and the number of target keys is determined as 2, then by selecting idle keys that are subsequent to key "a", keys "b" and "d" are determined as the target keys.
S103: obtaining to-be-stored metadata of the to-be-stored file based on the determined target key.

Generally, the metadata of the to-be-stored file may include an identifier of the to-be-stored file, the amount of data of the to-be-stored file, the storage location for the to-be-stored file, and the like.

After the target key is determined, the storage location for the to-be-stored file is thereby determined. Thus, the metadata of the to-be-stored file, i.e., the above-described to-be-stored metadata, can be obtained based on the target key.

In an implementation of the present application, in the case where a plurality of target keys are determined for storing the to-be-stored file, before obtaining to-be-stored metadata of the to-be-stored file based on the determined target keys, the method may further include:
obtaining a file block to be stored of the to-be-stored file, which is to be stored by each target key, based on the number of the determined target keys.

Generally, one target key corresponds to one file block, and a file block is a piece of data of the to-be-stored file. Thus, one target key corresponds to a piece of data of the to-be-stored file. For example, if the amount of data of a to-be-stored file is 1 M and the number of target keys is 2, two file blocks of the to-be-stored file, with the amount of data of each file block being 0.5 M, may be obtained. In other words, each target key corresponds to 0.5 M data of the to-be-stored file. In an implementation of the present application, the sizes of the obtained file blocks of the to-be-stored file are not necessarily the same. For example, after determining the target keys for storing the to-be-stored file, several file blocks having the amount D1 of data are obtained in turn from the to-be-stored file (D1 is the amount of data that can be stored by each target key). If the amount D3 of data of the last obtained file block A is smaller than the amount D1 of data, the file block A may be directly determined as a file block corresponding to one target key.

For example, if the amount D2 of data of the to-be-stored file is 1.2 M, and the amount D1 of data that can be stored by each target key is 1 M, then the number of target keys may be determined as 2. Two idle keys that are subsequent to the end storage location after the last storing of data are selected as the target keys. If the names of the selected two idle keys are respectively Key1 and Key2, a file block of 1 M corresponding to the key named Key1 and a file block of 0.2 M corresponding to the key named Key2 may be obtained from the to-be-stored file.

In an implementation of the present application, the storage terminal may directly divide the to-be-stored file into a plurality of file blocks, which equals to the number of the target keys, based on the number of the target keys, wherein the amount D3 of data of each file block is not greater than the amount D1 of data that can be stored by each target key. At this point, the file blocks may be directly obtained, and are stored in the corresponding target key.

In this case, obtaining to-be-stored metadata of the to-be-stored file based on the determined target key may include:
obtaining metadata of the file block to be stored by each target key, and determining the obtained metadata as the to-be-stored metadata of the to-be-stored file.

Generally, in a case where a plurality of target keys are determined, the to-be-stored file may be stored in the plurality of keys in a form of file block. In this case, each file block will correspond to a specific storage location, and the storage locations of the file blocks may not be continuous. In addition, since the offsets of the file blocks respectively relative to the file header of the to-be-stored file are different, the to-be-stored metadata of the to-be-stored file includes not only the information of the storage location of each file block, but also the information of the offset of the file block relative to the file header of the to-be-stored file. In this way, it can be ensured that after all file blocks of the file are read from the storage device, these file blocks can be correctly combined to obtain the entire file.

In this case, since a file block is a part of a to-be-stored file, the metadata of the file block stored in the values of each target key may be obtained and used as a part of the to-be-stored metadata of the to-be-stored file. The metadata of all the file blocks of the to-be-stored file constitutes the complete to-be-stored metadata of the to-be-stored file.

It should be noted that metadata of a file block may include: an identifier of a to-be-stored file to which the file block belongs, an identifier of a domain that stores the file block, an offset of the file block in the to-be-stored file, and the amount of data of the file block. The identifier of the domain that stores the file block is an additional attribute in the storage terminal of the to-be-stored file. A storage terminal may contain a plurality of domains, and a domain may contain a plurality of storage terminals. The file blocks of the to-be-stored file may be stored in several domains. With an identifier of the domain that stores the file block makes, it possible to more accurately and quickly obtain this file block when reading the file. In addition, the offset of the file block in the to-be-stored file is an offset of the file block relative to the file header of the to-be-stored file. As in the above example, the offset of the file block stored in the value of the key named Key2 in the to-be-stored file is 1 M.

In an implementation of the present application, obtaining the metadata of the file block to be stored by each target key may include:
S1, determining an offset of a file block to be stored by each target key relative to a file header of the to-be-stored file.

In an implementation of the present application, determining an offset of the file block to be stored by each target key relative to a file header of the to-be-stored file may include:
calculating an offset of a file block F to be stored by a target key X relative to the file header of the to-be-stored file, wherein the target key X is any of the several target keys corresponding to the to-be-stored file.

The offset of the file block relative to the file header of the to-be-stored file is also a part of the to-be-stored metadata of the to-be-stored file. With the storing of the offsets, when reading the file, the storage terminal may accurately obtain the file blocks of the file based on the offsets, and combine file blocks stored in a plurality of keys and belonging to the same file into a complete and correct file in a correct order.

S2, obtaining, based on the offset of the file block to be stored by each target key relative to the file header of the to-be-stored file, metadata of the file block to be stored by each target key, based on the determined offset.

In an implementation of the present application, after determining the offset of the file block F relative to the file header of the to-be-stored file, the metadata of the file block F to be stored by the value of the target key X is obtained based on the metadata information, such as the identifier of the to-be-stored file, the amount of data of the file block F, and the identifier of the domain that stores the file block F.
S104: storing the to-be-stored metadata into a preset metadata database and into a name of the determined target key, and storing the to-be-stored file into a value of the determined target key.

Here, the preset metadata database is used for storing metadata of files.

Generally, the storage terminal may store the to-be-stored metadata into the preset metadata database and the name of the target key, and meanwhile store the to-be-stored file into the value of the target key. In this way, the data can be accessed based on the metadata in the metadata database. In addition, the to-be-stored metadata is stored in the name of the target key, so that the metadata in the metadata database may be restored based on the metadata stored in the name of the key in the event that the metadata in the metadata database is lost. The storage space occupied by the name of each key is fixed. Regardless of whether the storage space corresponding to the name of each key is filled with information, the name of each key will occupy a fixed storage space. As a result, storing the to-be-stored metadata into the name of the target key not only backs up the metadata of the file but also occupies no additional storage space, thereby indirectly saving the storage space of the storage terminal.

It should be noted that the above-described step of storing the to-be-stored file may be performed simultaneously with the step of storing the to-be-stored metadata, may be performed before storing the to-be-stored metadata but after S102, or may be performed after storing the to-be-stored metadata, which is not limited herein.

In an implementation of the present application, when there are a plurality of target keys, the rule for naming keys may be: [identifier of the file]_[identifier of the domain where the file is located]_[offset of the file block stored in the value of the key relative to the file header of the file ]_[amount of data of the file block of the file stored in the value of the key]. In an embodiment, according to the description in step S103, the keys may be named with reference to Table 1. Table 1 shows original names of the keys versus names of the keys in the embodiment of the present application.

**Table 1**

| Original names of keys | Names of keys in the embodiment of the present application |
|---|---|
| key1 | [file1]_[1]_[0]_[len_in_key1] |
| key2 | [file1]_[1]_[len_in_key1]_[len_in_key2] |

The original name of the first key is key1, and the original name of the second key is key2.

In the name of the key in the embodiment of the present application, [file1] is the identifier of the file A and [1] is the identifier of the domain that stores the file A, which indicates that the file A is stored in the domain 1.

In the first key (originally named as key1) in the embodiment of the present application, [0] is the offset of the file block stored in the value of this key relative to the file header of the file A. Because the first key-value stores the file block starting from the file header of file A, the offset of the first key is 0. [len_in_key1] indicates the amount of data of the file block stored in the value of the first key.

In the second key (originally named as key2) in the embodiment of the present application, [len_in_key1] is the offset of the file block stored in the value of the first key relative to the file header of the file A. Because the file block having the amount of data [len_in_key1] has been stored in the first key, the offset of the second key is [len_in_key1]. [len_in_key2] indicates the amount of data of the file block stored in the second key.

As can be seen from the above, the names of the keys store the metadata in the metadata database. In the event that the metadata stored in the metadata database is lost, the metadata may be restored based on the metadata stored in the names of the keys.

In an implementation of the present application, the file blocks are sequentially stored into the target keys, in ascending order of offsets from the starts of storage locations of the file blocks to the file header of the to-be-stored file. This can avoid the problem that some file block of the to-be-stored file may not be successfully stored. In addition, in storing the file blocks into the target keys, the file blocks are sequentially stored in ascending order of the physical addresses or the logical addresses of the target keys, so that the storage terminal can quickly obtain the file blocks of the to-be-stored file when reading the to-be-stored file.

In addition, after successfully storing the to-be-stored file, the storage terminal stores the metadata of the to-be-stored file. This ensures the accuracy of the metadata in the metadata data, and avoids a series of problems, e.g., the problems that the metadata of the to-be-stored file is stored while the to-be-stored file is not successfully stored, that the storage terminal is thus unable to correctly read the metadata in the metadata database, and that a crash of the storage terminal thus occurs.

With the embodiment shown in FIG. 1, after receiving a request for storing a to-be-stored file, the storage terminal obtains to-be-stored metadata for the to-be-stored file, stores the to-be-stored metadata into the name of the target key and into the metadata database, and stores the to-be-stored file into the value of the target key. In this way, the metadata in the metadata database may be restored based on the metadata stored in the name of the key in the event that the metadata in the metadata database is lost, ensuring the recovery of the metadata. Additionally, metadata are stored into the fixed storage space that originally taken by the name of the key and thus does not occupy additional storage space, thereby saving storage space of the storage terminal.

Referring to FIG. 2, it is a schematic flowchart of another method for storing a file provided by an embodiment of the present application. The method is applicable in a storage terminal, and may further include the following step.
S105: in the event that there is a loss of metadata in the preset metadata database, updating the preset metadata database based on metadata stored in names of all keys.

In an implementation of the present application, each time the metadata stored in the metadata database is updated, a first check value is obtained, and a second check value may be obtained before the next storing of metadata. When the first check value and the second check value are different, it can be determined that there is a loss of metadata in the metadata database. In an implementation of the present application, the check value may be obtained based on CRC (Cyclic Redundancy Check) algorithm or other check algorithm.

In an implementation of the present application, when it is determined that there is a loss of metadata in the metadata database, the metadata may be obtained based on the information, such as the identifier of the file stored in the names of all keys, the offsets from the start positions of the file blocks stored in the values of the keys to the file header of this file, the identifier of the domain where the file is located, and the amount of data of the file blocks stored in the values of the keys. All the original data in the metadata database is replaced with the obtained metadata, so that the metadata database can be updated, ensuring the recovery of the metadata in the metadata database and avoiding a loss of the file.

It should be noted that step S105 may be performed before any of the steps S101, S102, S103 and S104, may also be performed after any of the steps S101, S102, S103 and S104, or may further be performed at the same time as any of the steps S101, S102, S103 and S104, which is not limited herein.

With the embodiment shown in FIG. 2, in the event that there is a loss of the metadata in the preset metadata database, the storage terminal updates the preset metadata database based on the metadata information stored in the names of all the keys, which can effectively restore the metadata in the metadata database and avoid loss of the file.

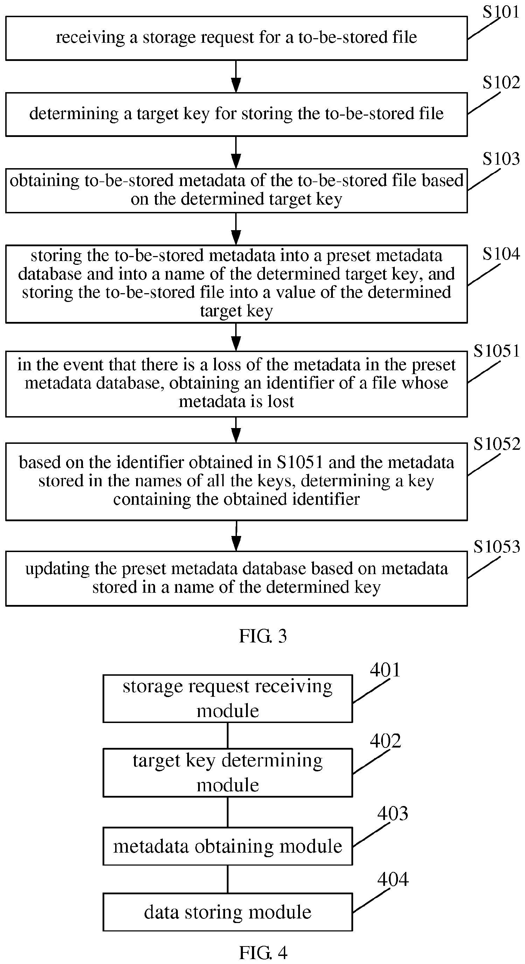

Referring to FIG. 3, FIG. 3 is a schematic flowchart of another method for storing a file provided by an embodiment of the present application. The method is applicable to a storage terminal, and the step S105 may include:
S1051: in the event that there is a loss of the metadata in the preset metadata database, obtaining an identifier of a file whose metadata is lost.

In an implementation of the present application, the lost metadata may be only a small part of metadata in the metadata database. At this point, if all the metadata stored in the metadata database is updated, the workload of the storage terminal will increase, and the restore of the metadata will be slow. If only the lost metadata in the metadata database is updated, the workload of the storage terminal will be greatly reduced, and the restore of the metadata will be accelerated.

In an implementation of the present application, when the storage terminal reads a certain file and fails, it can be determined that the metadata of the file in the metadata database is lost. The storage terminal is then obtains the identifier of the file. In an implementation of the present application, the identifier of the file may be obtained from a request for reading this file.
S1052: based on the identifier obtained in S1051 and the metadata stored in the names of all the keys, determining a key containing the obtained identifier.

In an embodiment of the present application, the metadata contains the identifier of the file. The metadata stored in the names of all the keys may be read, and it is determined whether the read metadata contains the identifier of the file whose metadata is lost. If the metadata stored in the name of a key contains the identifier of the file, this key is obtained and determined as the key containing the identifier of the file.
S1053: updating the preset metadata database based on metadata stored in a name of the determined key.

In an embodiment of the present application, after determining the keys containing the metadata, based on the rule for naming keys (such as the rule described in the step S104), the metadata of the file or file block stored in the value of the key may be obtained, the obtained metadata is stored with respect to the identifier of the file into the metadata database to update the metadata in the metadata database.

With the embodiment shown in FIG. 3, in the event that metadata in the preset metadata database is lost, the storage terminal may need to obtain only the identifier of the file whose metadata is lost; determine a key containing the obtained identifier based on the obtained identifier and the metadata stored in the names of all the keys; update the preset metadata database with the metadata stored in the name of the determined key, with respect to the identifier of the file. This reduces the workload of the storage terminal and improves the efficiency of updating the metadata database.

Referring to FIG. 4, it is a schematic structure diagram of an apparatus for storing a file provided by the present application. The apparatus is applicable in a storage terminal and includes: a storage request receiving module 401, a target key determining module 402, a metadata obtaining module 403 and a data storing module 404.

The storage request receiving module 401 is configured for receiving a storage request for a to-be-stored file;
the target key determining module 402 is configured for determining a target key for storing the to-be-stored file;
the metadata obtaining module 403 is configured for obtaining to-be-stored metadata of the to-be-stored file based on the determined target key; and
the data storing module 404 is configured for storing the to-be-stored metadata into a preset metadata database and into a name of the determined target key, and storing the to-be-stored file into a value of the determined target key.

In an implementation of the present application, the apparatus for storing a file may further include a file block obtaining module (not shown in FIG. 4).

The file block obtaining module is configured for, in the case where a plurality of target keys are determined, obtaining a file block of the to-be-stored file, which is to be stored by each target key, based on the number of the determined target keys.

In this case, the metadata obtaining module 403 is specifically configured for:
obtaining metadata of the file block to be stored by each target key, and determining the obtained metadata as the to-be-stored metadata of the to-be-stored file.

In an implementation of the present application, the metadata obtaining module 403 may include: an offset determining submodule and a metadata obtaining submodule (not shown in FIG. 4).

The offset determining submodule is configured for determining an offset of a file block to be stored by each target key relative to a file header of the to-be-stored file; and
the metadata obtaining submodule is configured for obtaining metadata of a file block to be stored by each target key, based on an offset of a file block to be stored by this target key relative to a file header of the to-be-stored file.

With the embodiment shown in FIG. 4, after receiving the storage request for storing a file, the storage terminal obtains to-be-stored metadata for the to-be-stored file, stores the to-be-stored metadata into the name of the target key and into the metadata database and stores the to-be-stored file into the value of the target key. In this way, the metadata in the metadata database may be restored based on the metadata stored in the name of the key in the case where the metadata in the metadata database is lost, ensuring the recovery of the metadata. Additionally, metadata are stored into the fixed storage space that originally taken by the name of the key and thus does not occupy additional storage space, thereby saving storage space of the storage terminal.

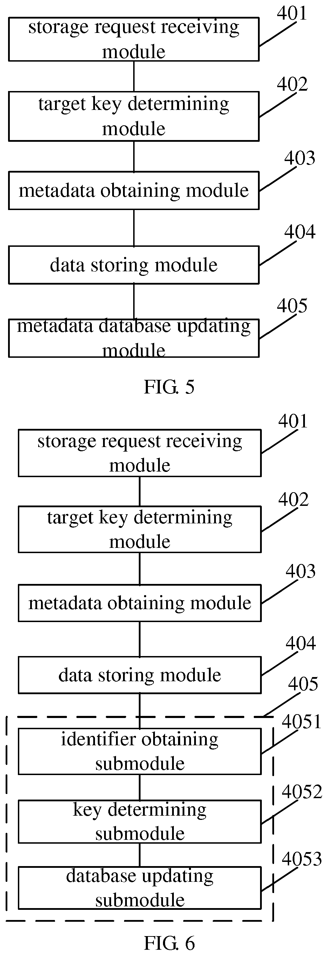

Referring to FIG. 5, it is a schematic structural diagram of another apparatus for storing a file provided by the present application. The apparatus is applicable in a storage terminal and may further include: a metadata database updating module 405.

The metadata database updating module 405 is configured for, in the event that there is a loss of metadata in the preset metadata database, updating the preset metadata database based on metadata stored in names of all keys.

With the embodiment shown in FIG. 5, in the event that there is a loss of metadata in the preset metadata database, the storage terminal updates the preset metadata database based on the metadata information stored in the names of all the keys, which can effectively restore the metadata in the metadata database and avoid loss of the file.

Referring to FIG. 6, it is a schematic structural diagram of another apparatus for storing a file provided by the present application. The apparatus is applicable in a storage terminal, and the to-be-stored metadata contains an identifier of the to-be-stored file. In the apparatus, the metadata database updating module 405 may include an identifier obtaining submodule 4051, a key determining submodule 4052 and a database updating submodule 4053.

The identifier obtaining submodule 4051 is configured for obtaining an identifier of a file whose metadata is lost.

The key determining submodule 4052 is configured for, based on the obtained identifier and the metadata stored in the names of all keys, determining a key containing the obtained identifier.
the database updating submodule 4053 is configured for updating the preset metadata database based on the metadata stored in a name of the determined key.

With the embodiment shown in FIG. 6, in the event that there is a loss of metadata in the preset metadata database, the storage terminal may need to obtain the identifier of the file whose metadata is lost; determine the a key(s) containing the obtained identifier based on the obtained identifier and the metadata stored in the names of all the keys; and update the preset metadata database based on the metadata stored in the names of the determined keys. This reduces the workload of the storage terminal and improves the efficiency of updating of the metadata database.

An embodiment of the present application provides a storage terminal. The storage terminal includes a housing, a processor, a memory, a circuit board, and a power circuit. The circuit board is arranged inside space surrounded by the housing. The processor and the memory are arranged on the circuit board. The power circuit is used for supplying power to each circuit or component of the storage terminal. The memory is used for storing an executable program code; and the processor carries out the following steps by executing the executable program code stored in the memory:
receiving a storage request for a to-be-stored file;
determining a target key for storing the to-be-stored file;
obtaining to-be-stored metadata of the to-be-stored file based on the determined target key; and
storing the to-be-stored metadata into a preset metadata database and into a name of the determined target key, and storing the to-be-stored file into a value of the determined target key.

In an embodiment of the present application, the storage terminal is further configured for:
in the case where a plurality of target keys are determined, before obtaining to-be-stored metadata of the to-be-stored file based on the determined target keys,
obtaining a file block to be stored of the to-be-stored file, which is to be stored by each target key, based on the number of the determined target keys;
obtaining to-be-stored metadata of the to-be-stored file based on the determined target keys comprises:
   obtaining metadata of the file block to be stored by each target key, and determining the obtained metadata as the to-be-stored metadata of the to-be-stored file.

In an embodiment of the present application, the storage terminal is further configured for:
determining an offset of a file block to be stored by each target key relative to a file header of the to-be-stored file; and
obtaining metadata of a file block to be stored by each target key, based on an offset of a file block to be stored by each target key relative to a file header of the to-be-stored file.

With the embodiment of the present application, after receiving a storage request for storing a file, the storage terminal obtains to-be-stored metadata for the to-be-stored file, stores the to-be-stored metadata into the name of the target key and into the metadata database, and stores this to-be-stored file into the value of the target key. In this way, the metadata in the metadata database may be restored based on the metadata stored in the name of the key in the event that the metadata in the metadata database is lost, ensuring the recovery of the metadata. Additionally, metadata are stored into the fixed storage space that originally taken by the name of the key and thus does not occupy additional storage space, thereby saving storage space of the storage terminal.

The storage terminal exists in various forms including but not limited to:
(1) mobile communication devices: such devices are characterized by having mobile communication functions and mainly aim to provide voice and data communications. Such terminals include: smart phones (e.g., iPhones), multimedia phones, functional phones, low-end phones, and the like.
(2) ultra-mobile personal computer devices: such devices belong to the category of personal computers, have computing and processing functions, and generally also have mobile network features. Such terminals include: PDAs, MIDs, UMPCs (e.g., iPads), and the like.
(3) portable entertainment devices: such devices can display and play multimedia contents. Such devices include: audio and video players (e.g., iPods), Portable Game Consoles, eBooks, smart toys and portable onboard navigation devices.
(4) servers that are devices that provide computing services: such a device is composed of, for example, a processor, a hard disk, a RAM, a system bus. The architecture of a server is similar to that of a general computer, but because of the requirement of providing highly reliable services, it has relatively high processing capacity, stability, reliability, security, expandability, manageability and the like.
(5) other electronic apparatuses that have a data interaction function.

An embodiment of the present application provides an executable program code, which is used for performing the following steps when being executed::
receiving a storage request for a to-be-stored file;
determining a target key for storing the to-be-stored file;
obtaining to-be-stored metadata of the to-be-stored file based on the determined target key; and
storing the to-be-stored metadata into a preset metadata database and into a name of the determined target key, and storing the to-be-stored file into a value of the determined target key.

With the embodiment of the present application, after receiving the storage request for the to-be-stored file, the storage terminal obtains to-be-stored metadata of this to-be-stored file, stores this to-be-stored metadata into the name of the target key while storing this to-be-stored metadata into the metadata database and stores this to-be-stored file into the value of the target key. In this way, the metadata in the metadata database may be restored based on the metadata stored in the name of the key in the case where the metadata in the metadata database is lost, ensuring the recovery of the metadata. Additionally, the name of the key storing metadata originally occupies fixed storage space and does not occupy additional storage space, thereby saving storage space of the storage terminal.

An embodiment of the present application provides a storage medium for storing an executable program code, the executable program code is used for performing the following steps when being executed:
receiving a storage request for a to-be-stored file;
determining a target key for storing the to-be-stored file;
obtaining to-be-stored metadata of the to-be-stored file based on the determined target key; and
storing the to-be-stored metadata into a preset metadata database and into a name of the determined target key, and storing the to-be-stored file into a value of the determined target key.

With the embodiment of the present application, after receiving the storage request for the to-be-stored file, the storage terminal obtains to-be-stored metadata of this to-be-stored file, stores this to-be-stored metadata into the name of the target key while storing this to-be-stored metadata into the metadata database and stores this to-be-stored file into the value of the target key. In this way, the metadata in the metadata database may be restored based on the metadata stored in the name of the key in the case where the metadata in the metadata database is lost, ensuring the recovery of the metadata. Additionally, the name of the key storing metadata originally occupies fixed storage space and does not occupy additional storage space, thereby saving storage space of the storage terminal.

The description of the embodiments of the apparatus, the storage terminal, the executable program code and the storage medium are brief, since they are substantially similar to that of the embodiments of the method. Related contents can refer to the part in the description of the embodiments of the method.

It should be noted that the relationship terms used herein, such as "first", "second" and the like, if any, are only used to distinguish one entity or operation from another entity or operation, but do not necessarily require or imply that there is an actual relationship or order between these entities or operations. Moreover, the terms "include", "comprise", or any variants thereof are intended to cover a non-exclusive inclusion, such that processes, methods, articles, or devices, including a series of elements, include not only those elements that have been listed, but also other elements that are not specifically listed or the elements intrinsic to these processes, methods, articles, or devices. Without further limitations, elements defined by the wording "comprise(s) a/an..." do not exclude additional identical elements in the processes, methods, articles, or devices that include the listed element.

Those with ordinary skills in the art may understand that all or some of the steps in the implementation of the above method can be carried out by instructing related hardware through programs, which can be stored in a computer-readable storage medium, such as in ROM/RAM, a disk, an optical disk, and so on.

The embodiments described herein are simply preferred embodiments of the present application, and are not intended to limit the scope of protection of the present application. Any modifications, alternatives, improvements, or the like within the spirit and principle of the present application shall be included in the scope of protection of the present application.

## Claims

1. A method for storing a file, which is applicable in a storage terminal, comprising:
receiving a storage request for a to-be-stored file;
determining a target key for storing the to-be-stored file;
obtaining to-be-stored metadata of the to-be-stored file based on the determined target key; and
storing the to-be-stored metadata into a preset metadata database and into a name of the determined target key, and storing the to-be-stored file into a value of the determined target key.

2. The method of claim 1, wherein in the case where a plurality of target keys are determined, before obtaining to-be-stored metadata of the to-be-stored file based on the determined target keys, the method further comprises:
obtaining a file block of the to-be-stored file, which is to be stored by each target key, based on the number of the determined target keys;
obtaining to-be-stored metadata of the to-be-stored file based on the determined target keys comprises:
obtaining metadata of the file block to be stored by each target key, and determining the obtained metadata as the to-be-stored metadata of the to-be-stored file.

3. The method of claim 2, wherein obtaining metadata of the file block to be stored by each target key comprises:
determining an offset of a file block to be stored by each target key relative to a file header of the to-be-stored file; and
obtaining metadata of a file block to be stored by each target key, based on an offset of a file block to be stored by this target key relative to a file header of the to-be-stored file.

4. The method of claim 1, further comprising:
in the event that there is a loss of metadata in the preset metadata database, updating the preset metadata database based on metadata stored in names of all keys.

5. The method of claim 4, wherein the to-be-stored metadata comprises an identifier of the to-be-stored file;
updating the preset metadata database based on metadata stored in names of all keys comprises:
obtaining an identifier of a file whose metadata is lost;
based on the obtained identifier and the metadata stored in the names of all keys, determining a key containing the obtained identifier; and
updating the preset metadata database based on the metadata stored in a name of the determined key.

6. An apparatus for storing a file, which is applicable in a storage terminal, comprising: a storage request receiving module, a target key determining module, a metadata obtaining module and a data storing module; wherein,
the storage request receiving module is configured for receiving a storage request for a to-be-stored file;
the target key determining module is configured for determining a target key for storing the to-be-stored file;
the metadata obtaining module is configured for obtaining to-be-stored metadata of the to-be-stored file based on the determined target key; and
the data storing module is configured for storing the to-be-stored metadata into a preset metadata database and into a name of the determined target key, and storing the to-be-stored file into a value of the determined target key.

7. The apparatus of claim 6, further comprises: a file block obtaining module, configured for
in the case where a plurality of target keys are determined, obtaining a file block of the to-be-stored file, which is to be stored by each target key, based on the number of the determined target keys; wherein,
the metadata obtaining module is configured for:
obtaining metadata of the file block to be stored by each target key, and determining the obtained metadata as the to-be-stored metadata of the to-be-stored file.

8. The apparatus of claim 7, wherein the metadata obtaining module comprises: an offset determining submodule and a metadata obtaining submodule;
the offset determining submodule is configured for determining an offset of a file block to be stored by each target key relative to a file header of the to-be-stored file; and
the metadata obtaining submodule is configured for obtaining metadata of a file block to be stored by each target key, based on an offset of a file block to be stored by this target key relative to a file header of the to-be-stored file.

9. The apparatus of claim 6, further comprises:
a metadata database updating module, configured for, in the event that there is a loss of metadata in the preset metadata database, updating the preset metadata database based on metadata stored in names of all keys.

10. The apparatus of claim 9, wherein the to-be-stored metadata comprises an identifier of the to-be-stored file;
the metadata database updating module comprises: an identifier obtaining submodule, a key determining submodule and a database updating submodule; wherein,
the identifier obtaining submodule is configured for obtaining an identifier of a file whose metadata is lost;
the key determining submodule is configured for, based on the obtained identifier and the metadata stored in the names of all keys, determining a key containing the obtained identifier; and
the database updating submodule is configured for updating the preset metadata database based on the metadata stored in a name of the determined key.

11. A storage terminal, comprising: a housing, a processor, a memory, a circuit board, and a power circuit; wherein the circuit board is arranged inside a space surrounded by the housing; the processor and the memory are arranged on the circuit board; the power circuit is configured for supplying power to circuits or components of the storage terminal; the memory is configured for storing executable program codes; and the processor is configured for performing the following steps by executing the executable program codes stored in the memory:
receiving a storage request for a to-be-stored file;
determining a target key for storing the to-be-stored file;
obtaining to-be-stored metadata of the to-be-stored file based on the determined target key; and
storing the to-be-stored metadata into a preset metadata database and into a name of the determined target key, and storing the to-be-stored file into a value of the determined target key.

12. The storage terminal of claim 11, wherein the processor is configured for performing the following steps by executing the executable program codes stored in the memory:
in the case where a plurality of target keys are determined, before obtaining to-be-stored metadata of the to-be-stored file based on the determined target keys,
obtaining a file block to be stored of the to-be-stored file, which is to be stored by each target key, based on the number of the determined target keys;
obtaining to-be-stored metadata of the to-be-stored file based on the determined target keys comprises:
obtaining metadata of the file block to be stored by each target key, and determining the obtained metadata as the to-be-stored metadata of the to-be-stored file.

13. The storage terminal of claim 12, wherein the processor is configured for performing the following steps by executing the executable program codes stored in the memory:
determining an offset of a file block to be stored by each target key relative to a file header of the to-be-stored file; and
obtaining metadata of a file block to be stored by each target key, based on an offset of a file block to be stored by each target key relative to a file header of the to-be-stored file.

14. An executable program code, which is used for performing the following steps when being executed:
receiving a storage request for a to-be-stored file;
determining a target key for storing the to-be-stored file;
obtaining to-be-stored metadata of the to-be-stored file based on the determined target key; and
storing the to-be-stored metadata into a preset metadata database and into a name of the determined target key, and storing the to-be-stored file into a value of the determined target key.

15. A storage medium for storing an executable program code, which is used for performing the following steps when being executed:
receiving a storage request for a to-be-stored file;
determining a target key for storing the to-be-stored file;
obtaining to-be-stored metadata of the to-be-stored file based on the determined target key; and
storing the to-be-stored metadata into a preset metadata database and into a name of the determined target key, and storing the to-be-stored file into a value of the determined target key.
